# EUROPÄISCHE PATENTSCHRIFT

(11) **EP 2 361 823 B1**
(45) Veröffentlichungstag und Bekanntmachung des Hinweises auf die Patenterteilung: **19.09.2012**
(21) Anmeldenummer: 11154135.5
(22) Anmeldetag: 11.02.2011
(51) Int. Cl.: B62D 29/04, B62D 53/06

(54) **Balkenförmiges, langgestrecktes Trägerelement und Verfahren für seine Herstellung**
Longitudinal member for a chassis and method for producing same
Support longitudinal pour un châssis et son procédé de fabrication

(30) Priorität: 22.02.2010 EP 10154201
(43) Veröffentlichungstag der Anmeldung: 31.08.2011
(73) Patentinhaber: Kaiser, Ria, 21077 Hamburg (DE); Lange, Hans Juergen, 21077 Hamburg (DE)
(72) Erfinder: Kaiser, Ria, 21077 Hamburg (DE); Lange, Hans Juergen, 21077 Hamburg (DE)
(74) Vertreter: Raffay & Fleck

(56) Entgegenhaltungen:
- EP-A2- 0 908 300
- WO-A1-01/51338
- US-A- 4 573 707
- US-A- 5 882 460
- US-B1- 6 962 390

## Beschreibung

Die vorliegende Erfindung betrifft ein langgestrecktes, balkenförmiges Trägerelement zur Aufnahme von quer zu seiner Längserstreckung gerichteten Kräften sowie ein Verfahren zum Herstellen eines solchen.

Balkenförmige, langgestreckte Trägerelement finden in der Technik (US 4 573 707) an den unterschiedlichsten Orten und in verschiedensten Konstruktionen Einsatz. Sie dienen dazu, quer zu ihrer Längserstreckung anlastende Kräfte aufzunehmen und weiterzuleiten.

Unter "balkenförmig" im Sinne der Erfindung sind nicht etwa nur solche Elemente zu verstehen, die mit exakt gleichem Querschnitt einen exakt geraden Verlauf nehmen, sondern auch solche mit Querschnittsveränderungen und Richtungsänderungen im Verlauf (z.B. Kröpfungen). Mit der Beschreibung "balkenförmig" soll lediglich zum Ausdruck gebracht werden, dass das Trägerelement sich im Wesentlichen entlang einer Richtung der Länge nach erstreckt und deutlich länger ist als hoch bzw. breit. Ferner ist für ein solches balkenförmiges Trägerelement ein deutlich zweidimensionaler Querschnitt, also eine deutliche Erstreckung sowohl in Richtung der Breite als auch der Tiefe charakteristisch, anders etwa als bei einem Brett oder einer Bohle.

Ein Anwendungsfall für derartige Trägerelemente ist der Einsatz in Fahrgestellen für Fahrzeuge. Solche Fahrgestelle für Fahrzeuge, egal ob angetrieben oder gezogen, sind hohen Belastungen ausgesetzt und müssen entsprechend zur Aufnahme hoher Kräfte ausgelegt werden. Insbesondere im Bereich von Last transportierenden Fahrzeugen, wie Lastkraftwagen, Anhängern, Sattelaufliegern und dgl. gibt es Bestrebungen, das Fahrzeugeigengewicht soweit als möglich zu reduzieren, um die zuladbare Nutzlast zu erhöhen. Mit einer solchen Erhöhung der Nutzlast geht eine deutliche Verbesserung der Wirtschaftlichkeit einher. So können entweder mehr Güter während einer Transportfahrt transportiert werden, oder das Gesamtgewicht des Fahrzeuges reduziert sich bei gleicher Zuladung, was zu einer Absenkung des Kraftstoffverbrauches und auch einem ansonsten geringeren Verschleiß (Reifen, Bremsen, Kupplung und dgl.) führt. Diese allgemeinen Betrachtungen gelten aber nicht nur für Nutzfahrzeuge, auch für allein für den Transport von Personen bestimmte Fahrzeuge, wie etwa Omnibusse, aber auch Kraftfahrzeuge für den Individualverkehr, treffen ähnliche Überlegungen zu. Auch hier bringt eine Gewichtsersparnis bei gleicher Stabilität und Steifigkeit des Fahrwerkes Einsparungen im Kraftstoffverbrauch mit sich, die sich zudem günstig auf die Umwelt auswirken. Die Möglichkeiten der Gewichtsersparnis sind bei den bekannten Bauweisen von Fahrgestellen aus den bisher üblichen Materialien (insbesondere Stahl) an ihre Grenzen gestoßen. Entsprechend werden seit einiger Zeit Überlegungen mit neuen Werkstoffen angestellt, wobei hier Faserverbundwerkstoffe, dabei insbesondere Kohlefaser-Verbundwerkstoffe, ein besonderes Interesse der Konstrukteure genießen.

Andere Einsatzgebiete für derartige Trägerelemente sind z.B. der Spezialgerüstbau oder der Kranbau sowie allgemein Träger- und Ständerkonstruktionen in Bauwerken, wo ebenfalls hohe Kräfte von Trägerelementen aufzunehmen sind. Auch hier ist das Gewicht der bekannten mit Stahlträgern gebildeten Konstruktionen von Nachteil. Bei Kränen z.B. beschränkt das Gewicht die Transportfähigkeit eines solchen Kranes im Straßentransport.

Auch sind entsprechende Elemente aus Stahl wegen der Korrosionsanfälligkeit dieses Material in einem Ambiente mit aggressiven bzw. korrosiven Medien starkem Verschleiß bzw. korrosiver Verwitterung ausgesetzt und müssen entsprechend aufwendig gewartet und instandgehalten werden, z.B. durch Versiegeln mit einem Rostschutzanstrich. Dies gilt z.B. für solche Träger, die auf Seeschiffen oder auf dem Meer errichteten Bauwerken (Bohrinseln, Windenergieanlagen oder dergleichen) zum Einsatz kommen. Dort sind der hohe Salz- und der hohe Feuchtigkeitsgehalt in der Luft stark korrosiv wirkende Faktoren.

Hier setzt die Erfindung an, indem sie ein spezielles Trägerelement anzugeben sucht, welches leicht, hoch stabil und korrosionsbeständig ist und die erforderlichen Kräfte aufzunehmen vermag. Ferner wird auch nach einem Verfahren für die Herstellung eines solchen Trägerelementes gesucht.

Diese Aufgabe der Erfindung wird gelöst durch ein balkenförmiges, langgestrecktes Trägerelement mit den Merkmalen des Anspruchs 1, ein neuartiges und die Aufgabe lösendes Verfahren zum Herstellen eines solchen Trägerelementes ist in Anspruch 8 angegeben. Vorteilhafte Weiterbildungen des Trägerelements finden sich in den abhängigen Ansprüchen 2 bis 7, solche des Verfahrens in den Ansprüchen 9 und 10.

Wie zuvor bereits ausgeführt ist es eine Grundvoraussetzung und wesentliche Überlegung der Erfindung, zur Flexibilisierung der Bauweise und verbesserten Stabilisierung bei gleichzeitiger Realisierung der Leichtbauweise, ein Trägerelement mit einer ein Inneres in Längsrichtung des Trägerelements vollständig umschließenden, einstückig gebildeten Wand aus einem Faserverbundwerkstoff, insbesondere einem Carbonfaser-Verbundwerkstoff (CFK), zu bilden

Eine besonders gute Stabilität und einstückige Ausbildung erhält das Trägerelement erfindungsgemäß dadurch, dass die Faserlage, im Fall von mehreren Faserlagen wenigstens eine solche, eine solche ist, die durch Umflechten des Kerns aus einzelnen Fasern oder Fasersträngen gebildet ist. Umflechten ist eine seit langem auf dem Gebiet der Verarbeitung anderer Materialien bekannte Technik, mit der ein durchgehendes Gewirk mit innen verbleibendem Hohlraum gebildet werden kann. Diese Technik wird erfindungsgemäß nun angewandt, um eine entsprechende Faserlage passgerecht um den geformten Kern zu flechten, so dass hier bereits die Faserlage die Einstückigkeit der Wandung des späteren Trägerelements vorgibt, die durch das Umgießen mit dem Bindemittel noch einmal verstärkt und in ihrer Last aufnehmenden Eigenschaft letztlich mit bestimmt wird.

In dem Trägerelement kann ggf. noch ein Kern angeordnet sein, der insbesondere aus einem geschäumten Material, vorzugsweise geschäumten Kunststoff, hierbei insbesondere geschäumten PE oder geschäumten PP bestehen kann.

Das Trägerelement kann zur weiteren Versteifung im Inneren seines Hohlraumes einen zwei Wandungen verbindenden, mit diesem einstückig verbundenen Steg aus dem Fasermaterial aufweisen, der ebenfalls mit dem Bindemittel getränkt und so als Verbundmaterial gestaltet ist. Um ein solches Trägerelement herzustellen, werden bevorzugt zwei Kerne zunächst separat voneinander mit Faserlagen umfangsseitig belegt, insbesondere umflochten, dann mit zwei der bereits mit Fasern belegten Wandungen nebeneinander angeordnet und insgesamt noch einmal mit Faserlagen umgeben, insbesondere umflochten, bevor sie anschlie-βend insgesamt mit dem Bindemittel durchtränkt und aushärten gelassen werden. An den aneinander anliegenden Wänden der beiden so benachbart angeordneten Kerne bildet sich dann der einstückig mit der umgebenden Wandung des Trägerelements verbundene Steg in seinem Inneren aus. Die beiden Kerne können nun wieder als verlorene Kerne entfernt werden, sie können aber auch in dem Trägerelement verbleiben.

Typischerweise wird man für die Ausbildung des erfindungsgemäßen Trägerelements bzw. der das Innere umgebenden Wand mehrere übereinander liegenden Faserlagen verwenden, die über ein ausgehärtetes Bindemittel miteinander inniglich verbunden sind. Dies können allesamt durch Umflechten gebildete Lagen sein. Es können aber auch einzelne oder mehrere der Lagen durch auf andere Weise aus miteinander verwirkten, verflochtenen oder verwebten Fasern oder Fasersträngen gebildete Matten sein, die insbesondere an solchen Stellen, an denen eine zusätzliche Verstärkung gewünscht wird, separat aufgelegt, und ggf. anschließend von einer oder mehrere weitere umflochtener Faserlagen überdeckt werden können. Dabei ist es, wie oben bereits ausgeführt, erfindungsgemäß erforderlich, dass wenigstens eine, vorzugsweise mehrere, der einzelnen Faserlagen eine aus einzelnen Fasern oder Fasersträngen gebildete Lage ist, mit der bzw. mit denen der Kern umflochten ist.

Im Inneren eines erfindungsgemäßen Trägerelements können Leitungen, Leitungsschächte und/oder Lagerkavitäten, z.B. für die Lagerung von Betriebmedien (Druckluft, Hydrauliköl, Treibstoff, Wasser oder dgl.), ausgebildet sein. Hierzu können in einem in dem Trägerelement verbliebenen Kern bereits entsprechende Strukturen angelegt und mit den erforderlichen Maßnahmen abgedichtet und eingerichtet sein. Zum Beispiel kann für einen im Innern des Trägerelements auszubildenden Pneumatiktank eine entsprechende Lage aus einer luftundurchlässigen Kunststoffhaut gebildet und in ein geschäumtes Material eines Kernes eingebunden mit entsprechenden Anschlüssen bzw. Zu- und Ableitungen versehen sein. Am Ende des Herstellungsvorganges müssen nur an den entsprechenden Stellen Zugänge zu den Leitungen angebracht werden, um z.B. den Pneumatiktank mit einem Kompressor zu verbinden. Zweckmäßiger Weise werden entsprechende Anschlüsse an den Stirnseiten des Trägerelements vorgesehen, an denen dieses nicht zwingend eine Wand aus Faserverbundmaterial aufweisen muss, eine solche bevorzugt gerade nicht enthält. Um einen Anschluss an einer anderen als den Stirnseiten zu schaffen, kann dieser bei der Erstellung des Faserlagensystems für die Wandung bereits mit berücksichtigt werden, indem z.B. ein Rohr oder dergleichen befestigt und mit Fasern in der Umflechttechnik umflochten wird. Die so sehr stabil mit einbezogene Öffnung wird durch das anschließende Vergießen mit dem Bindemittel integraler und damit sehr stabiler Bestandteil der Wandung des Trägerelements. Auch ist es denkbar, das Innere eines solchen Trägerelements mit einem Leerrohr im Sinne eines Kabelschachtes auszurüsten, durch das elektrische Leitungen z.B. für die Versorgung der Beleuchtung eines Lastkraftwagenanhängers, in dessen Fahrgestell das Trägerelement bspw. als Längsträger Verwendung findet, oder für die Leitung von Steuersignalen zu einem an einem Kranausleger, der unter Einsatz eines oder mehrer erfindungsgemäßer Trägerelemente gebildet ist, gelegenen Modul. Solche Führungen für elektrische Zu- und Anschlussleitungen sind im Inneren des Trägerelements besonders sicher geschützt vor äußeren Einflüssen, können durch die Ausbildung nach Art eines Leerrohres einfach und schnell ausgetauscht werden.

Schließlich können an dem Trägerelement, sei es durch entsprechende Gestaltung des Kerns oder sei es durch Ansetzen und Festlegen von weiteren durch Näh-, Stick-, Flecht- oder sonstige Technik aus Fasern, insbesondere Carbonfasern, gebildeten Rohlingen an und anschließendes Vergießen derselben mit den Faserlagen, bereits weitere Strukturen integral mit dem Trägerelement zusammen geformt werden, wie etwa für einen Längsträger eines Fahrzeuges ein oder mehrer Achsböcke bzw. Achsaufnahmen, eine Aufnahme für ein Stützbein oder dergleichen Elemente. Dies ermöglicht eine weiter integrierte, hochstabile und äu-βerst leichtgewichtige Bauweise.

In der Verwendung z.B. als Längsträger in einem Fahrzeug kann es für das erfindungsgemäße Trägerelement entscheidend sein, dass dieses gekröpft oder geschränkt verläuft, um z.B. im verbauten Zustand in einem Abschnitt unterhalb desselben Bauraum für den Einbau eines Getriebes oder dergleichen bei ausreichender Bodenfreiheit zu erhalten.

Das erfindungsgemäße Verfahren, mit dem sich ein wie oben beschriebenes Trägerelement herstellen lässt, zeichnet sich durch folgende Schritte aus:
Zunächst wird wenigstens ein die Form des späteren Trägerelements bestimmender, langgestreckter Kern hergestellt. Anschließend wird dieser Kern mit wenigstens einer Lage aus geeigneten Fasern, insbesondere Carbonfasern, so belegt, dass der Kern in Längsrichtung gesehen umfangsseitig vollständig umschlossen ist. Diese eine Lage, bei mehreren Lagen jedenfalls eine der Lagen wird durch Umflechten des Kerns aus einzelnen Fasern bzw. Fasersträngen gebildet.
Dies bedingt ein in Umfangsrichtung des Kerns geschlossen hergestelltes Geflecht als Faserlage, die in sich bereits eine Einstückigkeit in dieser Richtung mit sich bringt und so erheblich zur Stabilität beiträgt.

Bevorzugt werden mehrere Lagen aus Fasern aneinander gelegt und/oder übereinander geschichtet. Die so um den Kern gelegten bzw. durch Umflechten ausgebildeten Lage bzw. Lagen wird bzw. werden mit einem Bindemittel getränkt, welches insbesondere ein Harz sein kann. Schließlich wird das Bindemittel aushärten gelassen, um einen den Kern umgebenden Faserverbundwerkstoff auszubilden.

Auf die oben geschilderte Weise wird so ein balkenförmiges langgestrecktesTrägerelement mit einer einstückig gebildeten, diesen in Längsrichtung umgebende Wandung erhalten. Die einstückige Ausbildung ist besonders günstig, da sie in Längsrichtung die unterschiedlichen, auf das spätere Trägerelement auftreffenden Belastungen sicher aufnehmen kann, ohne Schwachstellen, wie etwa Verbindungsstellen von zwei Schalen, aufzuweisen. So kann ein solches Trägerelement sowohl gegen Durchbiegung als auch gegen Verwindung ausreichend steif gestaltet werden, ohne dass es hierzu einer erheblichen Wandstärke bedarf. Typische Wandstärken werden in der Regel im Bereich von 5 - 10 mm liegen. Allerdings sind - je nach Anforderung an das Trägerelement auch deutlich stärkere sowie deutliche geringere Wandstärken möglich.

Der Kern kann dabei als bleibender oder aber auch als verlorener Kern gestaltet sein. Wird der Kern als bleibender Kern gewählt, so ist es von Vorteil, wenn dieser ebenfalls in Leichtbauweise gebildet wird, z.B. aus einem geschäumten Material, insbesondere einem Kunststoffschaum (z.B. PE- oder PP-Schaum). Ein solcher Schaum kann mit hoher Festigkeit und damit guter Bearbeitbarkeit und dennoch geringem Gewicht gebildet sein. Auch kann ein Kern durch eine mit einem Gas befüllbare Hülle gebildet sein. Eine solche Bauweise zeichnet sich durch ein besonders geringes Gewicht aus.

Es ist aber auch insbesondere möglich, den Kern als verlorenen Kern auszubilden, indem beispielsweise ein in einem Lösungsmittel löslicher Kunststoffkern verwendet und anschließend mittels des Lösungsmittels aus dem Hohlraum des ausgehärteten Verbundwerkstoffes im Inneren entfernt wird. Auch andere Arten des Entfernens eines verlorenen Kernes, z.B. thermisches Aufweichen unterhalb einer für den Carbonfaser-Verbundwerkstoff schädigenden Temperatur sind denkbar. Auch kann ein aus einer mit einem Gas befüllbaren Hülle gebildeter Kern, der zunächst wie ein Luftballon mit Gas befüllt und so auf die Größe des Kernes gebracht wird, verwendet werden. Nach Aushärten des Verbundwerkstoffes kann durch Ablassen des Gases der Kern in seiner Größe reduziert und entfernt werden.

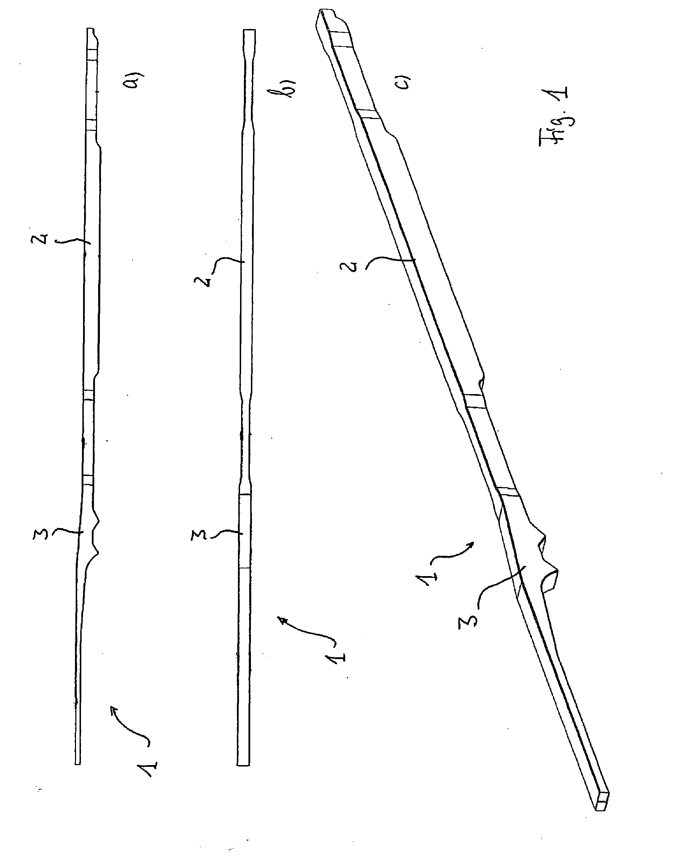

Weitere Vorteile und Merkmale der Erfindung ergeben sich aus der nachfolgenden Beschreibung eines Ausführungsbeispiels anhand der beigefügten Figuren. Dabei zeigen:
- Fig.: 1 a bis c in drei unterschiedlichen Darstellungen ein erfindungsgemäßes Trägerelement in Form eines Längsträger für einen Sattelauflieger von der Seite (Fig. 1a) von oben (Fig. 1b) und in einer dreidimensionalen Ansicht schräg von vorn (Fig. 1c);
- Fig. 2: schematisch den Aufbau eines erfindungsgemäßen Trägerelements ohne Innensteg und mit durchgehendem Innenhohlraum;
- Fig. 3: schematisch im Querschnitt den Aufbau eines erfindungsgemäßen Trägerelements mit einem in dessen Inneren verlaufenden, die obere und untere Außenwand einstückig verbindenden Steg.

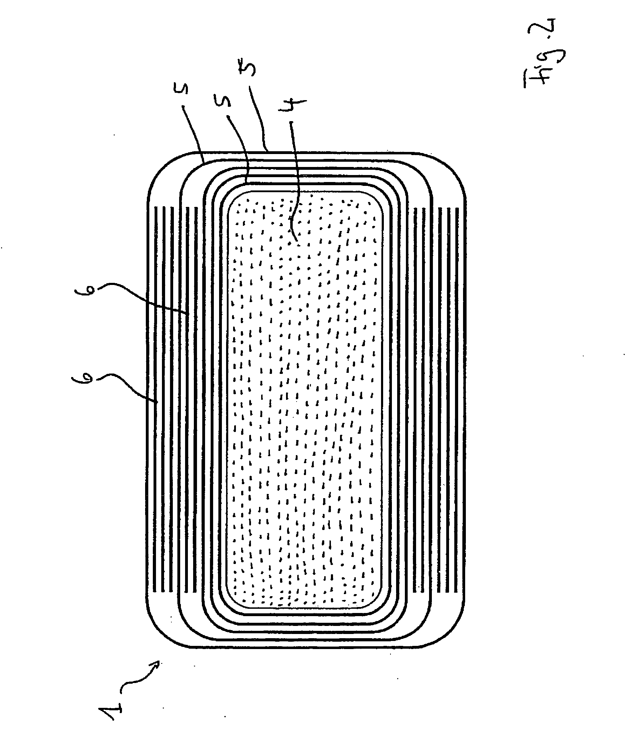

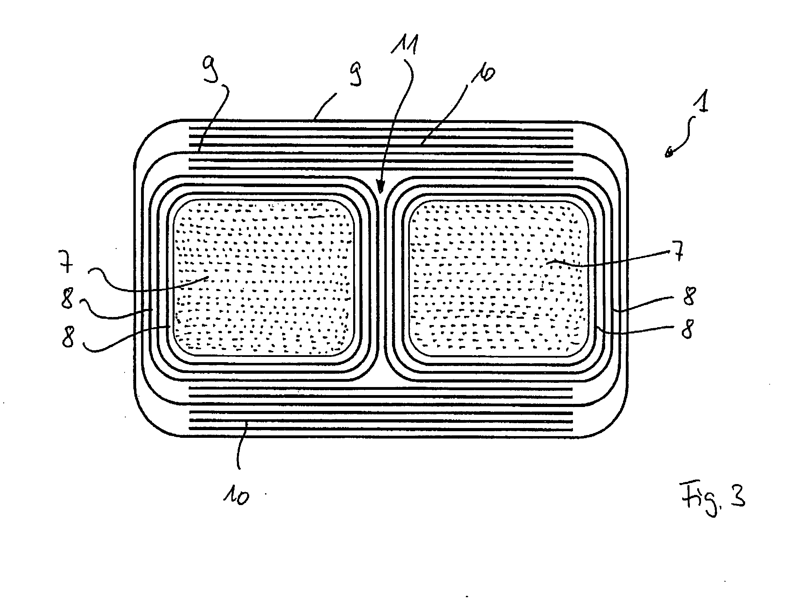

In Fig. 1 ist als ein Ausführungsbeispiel eines erfindungsgemäßen balkenförmigen, langgestreckten Trägerelements ein Längsträger 1 für einen Lkw-Sattelauflieger in drei verschiedenen Ansichten von der Seite (Fig. 1a), von oben (Fig. 1b) und in einer dreidimensionalen Ansicht schräg von vorn (Fig. 1c), gezeigt. Der Längsträger 1 weist eine einstückig ausgebildete, in Längsrichtung einen inneren Raum vollständig umschließende Wandung aus einem Faserverbundwerkstoff, insbesondere einem Carbonfaserverbundwerkstoff, auf und ist in weiter untenstehend noch näher zu erfolgender Beschreibung (vgl. Beschreibung der Figuren 2 und 3) aufgebaut.

Der Längsträger 1 ist entlang seines Längsverlaufes unterschiedlich konturiert und weist bestimmte, an die aufzunehmenden Lasten angepasste Funktionsbereiche auf. In einem in Einbaulage des Längsträgers weiter hinten gelegenen Bereich 2 ist dieser sowohl in seiner Breite als auch in seiner Bauhöhe verstärkt. In diesem Bereich werden im fertigen Fahrgestell die Achsen angelagert, so dass dort besonders hohe Belastungen auf den Längsträger einwirken, die die Verstärkung erforderlich machen.

Einen weiteren Bereich 3 mit besonderen Strukturen erkennt man im vorderen Abschnitt des Längsträgers 1. Dort wird bei fertig aufgebautem Fahrgestell eine Stützkonstruktion mit Stützen angeschlagen, die den Sattelauflieger im abgestellten Zustand in horizontaler Position halten. Auch dort wirken besonders hohe Kräfte auf den Längsträger 1, die durch die besondere Verstärkung abgefangen werden. In den weiteren Bereichen, in denen keine Lastspitzen aufzunehmen sind, ist der Längsträger 1 in Höhe und Breite reduziert, um Material und letztlich Gewicht zu sparen.

In Fig. 2 ist in einem schematischen Querschnitt der Längsträger 1 in einer Ausgestaltung mit durchgehendem Inneren gezeigt. Im Inneren des Längsträgers 1 befindet sich in dieser Darstellung ein Kern 4, der punktiert angedeutet ist. Um diesen Kern 4, der in einem Längsverlauf durchgehend die Form des Längsträgers 1, also auch mit den Strukturen z.B. in den Bereichen 2 und 3 vorgibt, sind einzelne Faserlagen, insbesondere aus Carbonfasern, angeordnet. Dabei sind den Kern vollständig umgebende Faserlagen 5, mit denen der Kern umflochten ist, insbesondere über im Wesentlichen seine gesamte Länge, mit einfachen einlagigen, in anderer Weise gewirkten, geflochtenen, geknüpften oder gewebten Faserlagen 6 abgewechselt angeordnet. Die hier zur Verdeutlichung stark auseinandergezogenen einzelnen Faserlagen 5, 6 bilden in der Realität eine eng aufeinander liegende Schichtung, die mit einem Bindemittel, insbesondere einem Harz, z.B. einem Epoxidharz durchtränkt ist zur Ausbildung eines Faserverbundwerkstoffes. Die Faserlagen 6 dienen insbesondere der zusätzlichen Verstärkung in lastkritischen Bereichen des Längsträgers 1. Insbesondere dadurch, dass der Kern 4 mit den Faserlagen 5 umflochten ist, welche Faserlagen 5 so für sich bereits eine einstückige Umhüllung des Kerns 4 bilden, und deren Durchtränkung und innigliche Verbindung mit dem Harz als bevorzugtes Bindemittel wird eine einstückige, hochfeste und damit für die Aufnahme hoher Kräfte und Lasten geeignete Struktur erzielt.

Der Kern 4 kann als fester Kern im fertigen Längsträger 1 verbleiben, er kann nach einem Herstellungsverfahren als verlorener Kern aber auch entfernt werden. In dem Kern 4 können insbesondere auch hier nicht gezeigte Leitungsführungen, Leitungen an sich oder Kavitäten zur Führung und Lagerung von Betriebsmedien, Kabelschächte zum Verlegen von elektrischen Leitungen und dgl. Strukturen ausgebildet sein.

In Fig. 3 ist eine alternative Ausgestaltung des Aufbaus des Längsträgers 1 wiederum in stark schematisierter Darstellung gezeigt. Hier sind zwei Kerne 7 ausgebildet und zunächst jeder für sich genommen mit Faserlagen 8, insbesondere aus Carbonfasern, umgeben, insbesondere umflochten. Die so mit Fasern ummantelten Kerne 7 sind nebeneinander positioniert worden, so dass sie insgesamt das Außenprofil des Längsträgers wiedergeben. Um diese Anordnung der beiden Kerne herum sind dann weitere Faserlagen 9, insbesondere aus Carbonfasern, mit denen die Kerne 7 umflochten sind, und abwechselnd in anderer Weise gestaltete, flache, der Verstärkung dienende Faserlagen 10, insbesondere aus Carbonfasern, angeordnet. Die so gebildete Konstruktion ist insgesamt mit einem Bindemittel, vorzugsweise einem Harz, durchtränkt, so dass um das durch die beiden Kerne 7 gebildete Innere herum eine einstückige Wand gebildet ist, die durch einen mittig in Längsrichtung verlaufenden Steg 11 überbrückt ist zur Erhöhung der Steifigkeit des Längsträgers.

Aus der voranstehenden Beschreibung ist der nutzbringende Wert des erfindungsgemäßen Trägerelements sowie des Verfahrens zu dessen Herstellung noch einmal deutlich geworden. Der als Beispiel gezeigte und beschriebene Längsträger kann in seiner Form individuell abgestimmt auf den Einsatzzweck gebaut und dabei aufgrund der Materialwahl und der besonderen einstückigen Ausgestaltung in hochfester Leichtbauweise verwirklicht werden. Es ist klar, dass die Erfindung nicht auf einen Längsträger einer Fahrzeugkonstruktion beschränkt ist, sondern in gleicher Weise andere balkenförmige, langgestreckte Trägerelemente gebildet werden können, z.B. für den Bau von Kranauslegern oder dergleichen.

### Bezugszeichenliste

- 1: Längsträger
- 2: Bereich
- 3: Bereich
- 4: Kern
- 5: Faserlage
- 6: Faserlage
- 7: Kern
- 8: Faserlage
- 9: Faserlage
- 10: Faserlage
- 11: Faserlage

## Patentansprüche

1. Balkenförmiges, langgestrecktes Trägerelement zur Aufnahme von quer zu seiner Längserstreckung gerichteten Kräften mit einer ein Inneres in Längsrichtung vollständig umschließenden, einstückig gebildeten Wand aus einem Faserverbundwerkstoff, insbesondere einem Carbonfaserverbundwerkstoff, wobei die Wand aus einer oder mehreren Lagen von übereinanderliegenden, über ein ausgehärtetes Bindemittel miteinander inniglich verbundenen Faserlagen (5, 6, 8, 9, 10), insbesondere Carbonfaserlagen, besteht, **dadurch gekennzeichnet, dass** die Faserlage (5, 8, 9) bzw. bei mehreren Faserlagen (5, 6, 8, 9, 10) wenigstens eine der Faserlagen (5, 8, 9) eine in Umfangsrichtung des Querschnittes geschlossene, aus einzelnen Fasern oder Fasersträngen durch Umflechten eines Kerns (4, 7) gebildete Faserlage ist.

2. Trägerelement nach Anspruch 1, **dadurch gekennzeichnet, dass** der Kern nach dem Umflechten und vor Fertigstellung des Trägerelementes (1) entfernt worden ist.

3. Trägerelement nach Anspruch 1, **dadurch gekennzeichnet, dass** in dem Inneren des fertigen Trägerelementes (1) der Kern (4, 7) angeordnet ist.

4. Trägerelement nach Anspruch 3, **dadurch gekennzeichnet, dass** der Kern (4, 7) aus einem anderen Material als dem Faserverbundwerkstoff besteht.

5. Trägerelement nach Anspruch 4, **dadurch gekennzeichnet, dass** der Kern (4, 7) aus einem geschäumten Material, insbesondere geschäumten Kunststoff, vorzugsweise aus geschäumtem PE oder geschäumten PP, besteht.

6. Trägerelement nach einem der vorhergehenden Ansprüche, **dadurch gekennzeichnet, dass** es in dem Innern wenigstens einen zwei einander gegenüberliegende Längsseiten verbindenden, mit der Wand einstückig verbundenen, sich in Längsrichtung des Trägerelements (1) zumindest über einen Teil von dessen Länge erstreckenden Steg (11) aus dem Verbundfaserwerkstoff aufweist.

7. Trägerelement nach einem der vorhergehenden Ansprüche, **dadurch gekennzeichnet, dass** er in seinem Inneren Leitungen, Leitungsschächte und/oder Lagerkavitäten aufweist.

8. Verfahren zum Herstellen eines Trägerelementes nach einem der vorhergehenden Ansprüche mit folgenden Schritten:
a) Herstellen wenigstens eines die Form des späteren Trägerelementes bestimmenden, langgestreckten Kerns;
b) Belegen des wenigstens einen Kerns mit wenigstens einer Faserlage, insbesondere einer Carbonfaserlage, so dass der Kern in Längsrichtung gesehen umfangsseitig vollständig umschlossen ist, wobei die wenigstens eine Faserlage, im Falle mehrerer Faserlagen wenigstens eine der Faserlagen, eine rund um den Kern durch Umflechten des Kerns aus einzelnen Fasern oder Fasersträngen gebildete in sich geschlossene Faserlage ist;
c) Tränken der wenigstens einen Faserlage mit einem Bindemittel, insbesondere einem Harz und
d) Aushärtenlassen des Bindemittels zum Ausbilden eines den Kern umgebenden, das Trägerelement bildenden Faserverbundwerkstoffes, insbesondere eines Carbonfaserverbundwerkstoffes.

9. Verfahren nach Anspruch 8, **dadurch gekennzeichnet, dass** der Kern aus einem geschäumten Material, insbesondere einem Kunststoffschaum, gebildet wird.

10. Verfahren nach einem der vorhergehenden Ansprüche 8 oder 9, **dadurch gekennzeichnet, dass** nach dem Aushärten des Bindemittels der Kern entfernt wird.

## Claims

1. An elongated beam-shaped carrying element for receiving forces directed crosswise to its longitudinal extension with a single piece wall completely surrounding an internal portion in the longitudinal direction, said wall being made of a fibre compound material, in particular made of a carbon fibre compound material, whereas the wall consists of one or several fibres (5, 6, 8, 9,10), in particular carbon fibre layers, firmly connected together via a hardened binder and lying on top of one another, **characterised in that** the fibre layer (5, 8, 9) resp. in the presence of several fibre layers (5, 6, 8, 9, 10) at least one of the fibre layers (5, 8, 9) is a fibre layer which is closed along the periphery of the cross section and consists of individual fibres or fibre strands, obtained by breading a core (4, 7).

2. A carrying element according to claim 1, **characterised in that** the core has been removed after the breading process and before completing the carrying element (1).

3. A carrying element according to claim 1, **characterised in that** the core (4, 7) is arranged in the internal portion of the finished carrying element (1).

4. A carrying element according to claim 3, **characterised in that** the core (4 7) consists of another material than the fibre compound material.

5. A carrying element according to claim 4, **characterised in that** the core (4 7) consists of a foamed material, in particular a foamed synthetic material, preferably a foamed PE or a foamed PP.

6. A carrying element according to any of the preceding claims, **characterised in that** it contains at least one bridge (11) extending in longitudinal direction of the carrying element (1), at least over a portion of its length, connected as a single piece with the wall, connecting two longitudinal sides which are opposite one another.

7. A carrying element according to any of the preceding claims, **characterized in that** it contains cables, cable ducts and/or storage cavities in its internal portion.

8. A method for manufacturing a carrying element according to one of the previous claims with the following steps:
a) producing at least one elongated core defining the shape of the next carrying element;
b) coating said at least one core with at least one fibre layer, in particular of a carbon fibre layer, so that the core seen in longitudinal direction is fully enclosed on its circumference, whereas said at least one fibre layer, in case there are several fibre layers at least one of the fibre layers, is a self-contained fibre layer formed around the core and which consists of individual fibres or fibre strands, obtained by breading the core;
c) soaking said at least one fibre layer with a binder, in particular a resin and
d) letting the binder harden to form a fibre compound material, in particular a carbon fibre compound material, forming the carrying element and surrounding the core,

9. The method of claim 8, **characterised in that** the core consists of a foamed material, in particular a plastic foam.

10. A method according to any of the preceding claims 8 or 9, **characterised in that** the core is removed once the binder has set.

## Revendications

1. Elément support allongé en forme de poutre destiné à recevoir des forces dirigées perpendiculairement à son étendue longitudinale, présentant une paroi d'un seul tenant et entourant une partie interne complètement dans l'axe longitudinal, constitué d'un matériau composite à fibres, en particulier d'un matériau composite en fibres de carbone, dans lequel la paroi se compose d'une ou de plusieurs couches de fibres (5, 6, 8, 9, 10), en particulier des couches de fibres de carboine, superposées et reliées solidement par un liant durci, **caractérisé en ce que** la couche de fibres (5, 8, 9) ou dans le cas de plusieurs couches de fibres (5, 6, 8, 9, 10) au moins l'une des couches de fibres (5, 8, 9) est une couche de fibres formée par entrelacement d'un coeur (4, 7), composé de fibres ou de brins de fibres individuels, confinée dans le sens de la circonférence de la section transversale.

2. Elément support selon la revendication 1, **caractérisé en ce que** l'on retire le coeur après ledit entrelacement et avant ledit terme de la fabrication de l'élément support (1).

3. Elément support selon la revendication 1, **caractérisé en ce que** le coeur (4, 7) est disposé dans la partie interne de l'élément support fini (1).

4. Elément support selon la revendication 3, **caractérisé en ce que** le coeur (4, 7) se compose d'un autre matériau que le matériau composite à fibres.

5. Elément support selon la revendication 4, **caractérisé en ce que** le coeur (4, 7) se compose d'un matériau mousse, en particulier un matériau synthétique mousse, de préférence de PE mousse ou de PP mousse.

6. Elément support selon l'une quelconque des revendications précédentes, **caractérisé en ce qu'**il présente dans la partie interne au moins une entretoise (11) reliant deux côtés longitudinaux opposés l'un à l'autre, reliée d'un seul tenant avec la paroi, s'étendant dans l'axe longitudinal de l'élément support (1) au moins sur une partie de la longueur de celui-ci, entretoise constitué dudit matériau à fibres composites.

7. Elément support selon l'une quelconque des revendications précédentes, **caractérisé en ce qu'**il présente dans sa partie interne des câbles, des passages de câbles et/ou des cavités de stockage.

8. Procédé de fabrication d'un élément supportselon l'une quelconque des revendications précédentes comportant les phases suivantes:
a) Fabrication d'au moins un coeur allongé, définissant la forme de l'élément support suivant;
b) Garniture dudit au moins un coeur à l'aide d'au moins une couche de fibres, en particulier d'une couche de fibres de carbone, de sorte que le coeur est intégralement entouré sur sa circonférence dans le sens longitudinal, dans lequel ladite au moins une couche de fibres, dans le cas de plusieurs couches de fibres au moins l'une des couches de fibres, est une couche de fibres refermée sur elle-même, formée tout autour du coeur, par entrelacement du coeur, composé de fils ou de brins de fibres individuels;
c) Imprégnation de ladite au moins une couche de fibres avec un liant, en particulier une résine et
d) Laisser durcir le liant pour constituer un matériau composite à fibres formant l'élément support et entourant le coeur, en particulier d'un matériau composite en fibres de carbone.

9. Procédé selon la revendication 8, **caractérisé en ce que** le coeur est constitué d'un matériau mousse, en particulier d'une mousse synthétique.

10. Procédé selon l'une quelconque des revendications précédentes 8 ou 9, **caractérisée en ce que** l'on retire le coeur après durcissement du liant.
